(19) Europäisches Patentamt
European Patent Office
Office européen des brevets

(11) **EP 2 936 199 B1**

(12) **EUROPÄISCHE PATENTSCHRIFT**

(45) Veröffentlichungstag und Bekanntmachung des Hinweises auf die Patenterteilung:
**21.08.2019 Patentblatt 2019/34**

(21) Anmeldenummer: **13814088.4**

(22) Anmeldetag: **17.12.2013**

(51) Int Cl.:
*G01S 15/93* (2006.01)    *G01S 15/87* (2006.01)
*H04L 9/32* (2006.01)    *G01S 7/52* (2006.01)

(86) Internationale Anmeldenummer:
**PCT/EP2013/076933**

(87) Internationale Veröffentlichungsnummer:
**WO 2014/095886 (26.06.2014 Gazette 2014/26)**

(54) **VERFAHREN ZUM FESTSTELLEN DER AUTHENTIZITÄT EINES ULTRASCHALLSENSORS EINES KRAFTFAHRZEUGS, STEUEREINHEIT, ULTRASCHALLSENSOR, ULTRASCHALLSENSORVORRICHTUNG UND KRAFTFAHRZEUG**

METHOD FOR DETERMINING THE AUTHENTICITY OF AN ULTRASOUND SENSOR OF A MOTOR VEHICLE, CONTROL UNIT, ULTRASOUND SENSOR, ULTRASOUND SENSOR DEVICE AND MOTOR VEHICLE

PROCÉDÉ POUR VÉRIFIER L'AUTHENTICITÉ D'UN CAPTEUR D'ULTRASONS DE VÉHICULE AUTOMOBILE, UNITÉ DE COMMANDE, CAPTEUR D'ULTRASONS, DISPOSITIF À CAPTEUR D'ULTRASONS ET VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.12.2012 DE 102012024880**

(43) Veröffentlichungstag der Anmeldung:
**28.10.2015 Patentblatt 2015/44**

(73) Patentinhaber: **Valeo Schalter und Sensoren GmbH**
**74321 Bietigheim-Bissingen (DE)**

(72) Erfinder: **HALLEK, Michael**
**74321 Bietgheim-Bissingen (DE)**

(74) Vertreter: **Enge, Sebastian et al**
**Valeo Schalter und Sensoren GmbH**
**CDA-IP**
**Laiernstraße 12**
**74321 Bietigheim-Bissingen (DE)**

(56) Entgegenhaltungen:
EP-A1- 2 426 869    WO-A2-00/78213
WO-A2-2008/103797    DE-A1- 10 236 879
DE-A1- 10 352 071    DE-A1-102005 033 977

EP 2 936 199 B1

## Beschreibung

Die Erfindung betrifft ein Verfahren zum Feststellen der Authentizität eines Ultraschallsensors eines Kraftfahrzeugs, der mittels einer Steuereinheit des Kraftfahrzeugs angesteuert wird. Die Erfindung betrifft außerdem eine Steuereinheit zur Ansteuerung eines Ultraschallsensors, einen Ultraschallsensor für ein Kraftfahrzeug, eine Ultraschallsensorvorrichtung sowie ein Kraftfahrzeug.

Ultraschallsensorvorrichtungen für Kraftfahrzeuge sind bereits Stand der Technik. Es ist bereits bekannt, eine Vielzahl von Ultraschallsensoren an dem vorderen und dem hinteren Stoßfänger eines Kraftfahrzeugs anzubringen. Mittels der Ultraschallsensoren können dann Abstände zu Hindernissen gemessen werden, die sich in der Umgebung des Kraftfahrzeugs befinden. Eine solche Vorrichtung wird im Stand der Technik auch als "Einparkhilfe" bezeichnet.

Ein Ultraschallsensor sendet bekanntlich Ultraschallwellen aus und empfängt reflektierte Ultraschallwellen, also zumindest einen Anteil der ausgesendeten und in der Umgebung reflektierten Ultraschallwellen. Zum Aussenden und Empfangen der Ultraschallwellen wird eine Membran - typischerweise aus Aluminium - verwendet, welche mittels eines Piezoelements zu einer mechanischen Schwingung angeregt wird. Beim Empfangen der reflektierten Ultraschallwellen stellt das Piezoelement ein elektrisches Empfangssignal (elektrische Spannung) bereit, welches dann ausgewertet wird. Werden Zielechos in dem Empfangssignal detektiert, so kann aus der Laufzeit des Signals der Abstand zum Hindernis bestimmt werden.

Ultraschallsensoren werden in einem Kraftfahrzeug mittels einer elektronischen Steuereinheit angesteuert. Die Steuereinheit bestimmt dabei die Zeitpunkte, zu denen die Ultraschallwellen ausgesendet werden sollen. Es ist typischerweise auch die Steuereinheit, die anhand des elektrischen Empfangssignals den Abstand zum Hindernis berechnet. Hinsichtlich der Kommunikation zwischen den Ultraschallsensoren einerseits und der Steuereinheit andererseits können grundsätzlich zwei Alternativen vorgesehen sein: Zum einen kann diese Kommunikation über separate Datenleitungen durchgeführt werden, wobei jedem Sensor eine eigene Datenleitung zugeordnet ist, welche diesen Sensor mit der Steuereinheit verbindet. Gemäß der zweiten Alternative können alle Ultraschallsensoren über einen gemeinsamen Kommunikationsbus mit der Steuereinheit gekoppelt sein. Beispielsweise wird der LIN-Bus verwendet. Unabhängig von der Topologie erfolgt die Datenkommunikation nach dem Master-Slave-Prinzip. Dies bedeutet, dass die Steuereinheit ein Master ist, während die Ultraschallsensoren Slaves sind. Jede Kommunikation wird durch den Master initiiert, während die Slaves ausschließlich antworten können.

Während der Herstellung bzw. während der Entwicklung von Ultraschallsensorvorrichtungen werden die Ultraschallsensoren auf die Steuereinheit abgestimmt, so dass die Kommunikation zwischen den Sensoren und der Steuereinheit fehlerfrei erfolgen kann. Nun hat sich herausgestellt, dass es immer wieder vorkommen kann, dass Teile einer Ultraschallsensorvorrichtung, nämlich insbesondere die Ultraschallsensoren selbst, durch plagiierte Komponenten ausgetauscht werden. Diese Komponenten sind nicht mehr so ausgelegt, dass ein fehlerfreier Betrieb der Ultraschallsensorvorrichtung stets gewährleistet ist. Diese Komponenten beeinträchtigen nämlich das Systemverhalten und beeinflussen dabei beispielsweise die Reaktionszeiten. Die nötige Stabilität des gesamten Systems ist dann nicht mehr gegeben, und im ungünstigsten Fall werden auch die Abstände falsch bestimmt, was zu einer potentiellen Gefahr führen könnte. Es wäre somit wünschenswert, gäbe es die Möglichkeit, solche Fremdkomponenten zu detektieren und beispielsweise die Ultraschallsensorvorrichtung sofort abzuschalten, um insbesondere eine Kollision zu vermeiden. Eine mögliche Lösung könnte beispielsweise darin bestehen, dass die Nachrichten zwischen den Ultraschallsensoren und der Steuereinheit verschlüsselt übermittelt werden. Eine solche Vorgehensweise ist jedoch aufgrund der verwendeten Kommunikationsprotokolle, nämlich des einfachen Protokolls bei einer Direktverbindung bzw. des allgemein zugänglichen Bus-Protokolls (z.B. LIN), nicht ohne Weiteres möglich. Diese Kommunikationsprotokolle bieten nämlich keinen Standard für eine verschlüsselte Datenübertragung. Der relevante Stand der Technik umfasst vorliegend folgende Dokumente: DE 103 52 071 A1, das die Authentizitätsprüfung von Kfz-Sensoren durch ein Steuergerät betrifft, sowie EP 2 426 869 A1 und DE 102 36 879 A1, die jeweils ein Verfahren für ein Kfz-Ultraschallsystem zur Zuweisung von Bus-Adressen offenbaren.

Es ist Aufgabe der Erfindung, eine Lösung aufzuzeigen, wie bei einem Verfahren der eingangs genannten Gattung die Authentizität des Ultraschallsensors ohne viel Aufwand und besonders zuverlässig durch die Steuereinheit überprüft werden kann.

Diese Aufgabe wird erfindungsgemäß durch ein Verfahren und einen Ultraschallsensor mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Verfahren dient zum Feststellen der Authentizität eines Ultraschallsensors eines Kraftfahrzeugs. Dies bedeutet insbesondere, dass festgestellt wird, ob der Ultraschallsensor ein Sensor ist, der durch denselben Hersteller wie die Steuereinheit hergestellt wurde und somit einen zuverlässigen Betrieb der gesamten Vorrichtung ermöglicht. Der Ultraschallsensor wird mittels einer elektronischen Steuereinheit des Kraftfahrzeugs angesteuert. Es wird ein vorbestimmter Datensatz von der Steuereinheit an den Ultraschallsensor übermittelt. Der Ultraschallsensor führt dann eine vorbestimmte Authentizitätsberechnung in Abhängigkeit von dem Datensatz durch und übermittelt ein Ergebnis dieser Berechnung an die Steuereinheit. Die Steuereinheit vergleicht das empfangene Ergebnis mit einem Sollergebnis und stellt die Authentizität des Ultraschallsensors abhängig von dem Vergleich fest.

Die Authentizität des Ultraschallsensors wird somit dadurch überprüft, dass der Sensor eine definierte Berechnung unter Verwendung eines von der Steuereinheit übermittelten und somit ursprünglich nur der Steuereinheit bekannten Datensatzes durchführt und das Ergebnis dieser Berechnung in einer der Steuereinheit bekannten Form zurück an die Steuereinheit übermittelt. Weil der Berechnungsalgorithmus und der Datensatz und/oder das fertige Sollergebnis auch in der Steuereinheit vorliegen, kann diese das empfangene Ergebnis mit dem Sollergebnis vergleichen und abhängig von diesem Vergleich feststellen, ob das übermittelte Ergebnis des Sensors korrekt ist oder nicht. Auf diese Weise lassen sich Ultraschallsensoren detektieren, welche gegebenenfalls den ordnungsgemäßen Betrieb der gesamten Ultraschallsensorvorrichtung beeinträchtigen könnten. Nach Detektion eines solchen Sensors kann die Steuereinheit dann eine Fehlermeldung ausgeben und die gesamte Ultraschallsensorvorrichtung beispielsweise abschalten.

Der genannte Datensatz ist vorzugsweise ausschließlich in der Steuereinheit (und nicht in dem Ultraschallsensor) dauerhaft - etwa in einem nichtflüchtigen Speicher - abgelegt. Der Datensatz wird nach dem Übermitteln an den Ultraschallsensor in diesem vorzugsweise lediglich temporär abgespeichert. Somit ist der Datensatz dem Ultraschallsensor selbst grundsätzlich nicht bekannt und wird dem Ultraschallsensor nur für eine begrenzte Zeitdauer zur Verfügung gestellt. Somit wird sichergestellt, dass ausschließlich "authentische" Ultraschallsensoren das richtige Ergebnis der Berechnung an die Steuereinheit übermitteln können. Diese Ausführungsform hat außerdem den Vorteil, dass für das Kraftfahrzeug eine Vielzahl von gleichen Ultraschallsensoren bereitgestellt werden können und der Datensatz sensorspezifisch von der Steuereinheit übermittelt werden kann, so dass an die unterschiedlichen Sensoren unterschiedliche Datensätze übermittelt werden. Somit kann der übermittelte Datensatz auch abhängig von der Position des Ultraschallsensors am Kraftfahrzeug ausgewählt werden, was sich insbesondere dann als vorteilhaft erweist, wenn der Datensatz Datenwerte beinhaltet, die im Betrieb des Ultraschallsensors beim Durchführen einer Abstandsmessung verwendet werden.

In einer Ausführungsform umfasst der Datensatz somit Datenwerte, die im Betrieb des Ultraschallsensors zum Durchführen einer Abstandsmessung durch den Ultraschallsensor verwendet werden. Somit kann an den Ultraschallsensor ein Datensatz als Grundlage für die vorbestimmte Authentizitätsberechnung übermittelt werden, der Datenwerte umfasst, die ohnehin im Betrieb des Ultraschallsensors benötigt und üblicherweise ohnehin dem Ultraschallsensor zur Verfügung gestellt werden. Es erübrigt sich somit die Bereitstellung eines zusätzlichen Datensatzes mit den damit verbundenen Nachteilen hinsichtlich des Speicherplatzes. Außerdem hat diese Ausführungsform auch den Vorteil, dass die Datenwerte, die im Betrieb des Ultraschallsensors beim Durchführen einer Abstandsmessung verwendet werden, in der Regel spezifisch für jedes Kraftfahrzeug bzw. für jedes Fahrzeugmodell oder jede Baureihe festgelegt werden, so dass diese Datenwerte bei unterschiedlichen Kraftfahrzeugen unterschiedlich sind. Dies sorgt für eine zusätzliche Sicherheit und eine zusätzliche Zuverlässigkeit bei der Überprüfung der Authentizität des Ultraschallsensors.

Es hat sich als vorteilhaft erwiesen, wenn der Datensatz Schwellwerte umfasst, mit denen die Höhe eines elektrischen Empfangssignals im Betrieb des Ultraschallsensors verglichen wird. Das elektrische Empfangssignal wird - wie bereits ausgeführt - abhängig von den empfangenen Ultraschallwellen bereitgestellt, nämlich mittels eines Piezoelements. Üblicherweise wird das elektrische Empfangssignal (insbesondere seine Einfüllende nach Filterung des Empfangssignals) mit abgelegten Schwellwerten verglichen, welche insgesamt eine entfernungsabhängige bzw. eine laufzeitabhängige Schwellwertfunktion bilden. Ein Zielecho und somit ein Zielobjekt in der Umgebung wird nur dann detektiert, wenn die Höhe des Empfangssignals diese Schwellwertfunktion überschreitet. Somit können Zielechos ausgeblendet werden, die nicht von tatsächlichen Zielobjekten, sondern von dem Boden stammen. Es wird nun vorgeschlagen, die an den Ultraschallsensor von der Steuereinheit übermittelten Schwellwerte auch als Grundlage für die vorbestimmte Authentizitätsberechnung zu verwenden. Weil die genannte Schwellwertfunktion üblicherweise eine Vielzahl von solchen Schwellwerten beinhaltet (üblicherweise 12 Schwellwerte jeweils in einem Wertebereich von 0 bis 31), kann auf Grundlage dieser Schwellwerte eine Berechnung durchgeführt werden, die besonders schwierig nachzuahmen ist. Lediglich beispielhaft sei an dieser Stelle ein Berechnungsalgorithmus genannt, bei welchem die übermittelten Schwellwerte abwechselnd addiert und subtrahiert werden.

Der Datensatz - insbesondere die Schwellwerte - wird dem Ultraschallsensor vorzugsweise bei jeder Inbetriebnahme des Kraftfahrzeugs übermittelt, d.h. bei jedem Anlassen des Motors mit Hilfe des zugeordneten Fahrzeugschlüssels oder eines entsprechenden Zünd-Druckschalters. Der Datensatz - insbesondere die Stellwerte - wird dann ausschließlich temporär in dem Ultraschallsensor abgespeichert und beim Abstellen des Kraftfahrzeugs wieder gelöscht. Die Authentifizierung des Ultraschallsensors kann somit bei jeder Inbetriebnahme des Kraftfahrzeugs durchgeführt werden, so dass bei jeder Inbetriebnahme überprüft wird, ob gegebenenfalls nicht erwünschte Komponenten eingebaut worden sind.

Der Ultraschallsensor führt die vorbestimmte Berechnung vorzugsweise automatisch und somit unmittelbar aufgrund der Übermittlung des Datensatzes oder aber eines zusätzlichen Steuersignals seitens der Steuereinheit durch. Die Steuereinheit kann somit grundsätzlich zu beliebigen Zeitpunkten ein Steuersignal abgeben, aufgrund dessen der Ultraschallsensor die vorbestimmte Berechnung an dem Datensatz durchführt und das Ergebnis dieser Berechnung an die Steuereinheit übermittelt.

Eine zusätzliche Sicherheit bei der Authentifizierung des Ultraschallsensors bzw. eine zusätzliche Schwierigkeit der Nachahmung des vorgegebenen Berechnungsalgorithmus ergibt sich dann, wenn mittels des Ultraschallsensors die vorbestimmte Berechnung zusätzlich in Abhängigkeit von einem sensorspezifischen Sensorparameter des Ultraschallsensors durchgeführt wird. Zusätzlich zu dem übermittelten Datensatz wird bei dem Berechnungsalgorithmus somit auch ein Sensorparameter berücksichtigt, welcher einen individuellen bzw. spezifischen Parameter des Ultraschallsensors darstellt und sich somit von Parameterwerten anderer Sensoren unterscheidet. Das Ergebnis der Berechnung ändert sich somit abhängig von dem jeweils augenblicklichen Wert des Sensorparameters, so dass es deutlich erschwert wird, den Berechnungsalgorithmus und somit die "Signierung" nur durch Überwachung der Datenleitung/Busleitung zwischen der Steuereinheit und dem Ultraschallsensor zu entschlüsseln.

Bevorzugt wird als Sensorparameter eine Messgröße verwendet, die mittels des Ultraschallsensors gemessen wird. Somit ist der aktuelle Wert des Sensorparameters einerseits abhängig von der Position des Ultraschallsensors am Kraftfahrzeug und andererseits auch abhängig von den Umgebungsbedingungen. Somit ist das berechnete Ergebnis des Ultraschallsensors individuell und unterscheidet sich auch von den Ergebnissen anderer Sensoren. Weil die Messgröße des Ultraschallsensors ohnehin in der Steuereinheit bekannt ist (diese empfängt das elektrische Empfangssignal), kann die Steuereinheit anhand des Datensatzes sowie anhand der Messgröße das Sollergebnis ermitteln und das von dem Ultraschallsensor übermittelte Ergebnis mit dem Sollergebnis vergleichen, um die Authentizität des Ultraschallsensors festzustellen.

Es erweist sich als vorteilhaft, wenn die vorbestimmte Berechnung in Abhängigkeit von einer Ausschwingzeit der Membran des Ultraschallsensors als Sensorparameter durchgeführt wird. Die Ausschwingzeit der Membran ist dabei von verschiedensten Einflüssen abhängig, wie insbesondere von der Umgebungstemperatur, dem Einbauort am Kraftfahrzeug, der verwendeten Anregung der Membran und dergleichen. Somit kann sichergestellt werden, dass der Sensorparameter bei jedem Ultraschallsensor einen unterschiedlichen Wert aufweist, so dass auch die Berechnungsergebnisse bei unterschiedlichen Ultraschallsensoren unterschiedlich sind und somit die Nachahmung des vorgegebenen Berechnungsalgorithmus besonders schwierig ist.

Die Erfindung ist jedoch nicht auf den genannten Sensorparameter "Ausschwingzeit" und auch nicht auf die genannten Schwellwerte als Datensatz beschränkt. Es können grundsätzlich beliebige Sensorparameter und/oder beliebige Datensätze verwendet werden. Es ist jedoch vorteilhaft, wenn einerseits der Datensatz individuell für das Kraftfahrzeug festgelegte Datenwerte (z.B. die genannten Schwellwert) umfasst, welche ausschließlich der Steuereinheit bekannt sind und der Ultraschallsensor diese erst nach einem Systemstart empfängt, und andererseits der Sensorparameter keinen konstanten Wert aufweist, sondern sich situationsbedingt verändert. Diese Kombination erschwert es deutlich, die Signierung nur anhand der Überwachung der Datenleitung/Busleitung zwischen der Steuereinheit und dem Ultraschallsensor zu entschlüsseln, da die Signierung (das Ergebnis der Berechnung) nicht konstant ist.

Eine erfindungsgemäße Steuereinheit ist zur Ansteuerung eines Ultraschallsensors eines Kraftfahrzeugs ausgebildet. Die Steuereinheit kann zum Feststellen der Authentizität des Ultraschallsensors einen Datensatz an den Ultraschallsensor übermitteln, ein Ergebnis einer vorbestimmten Berechnung auf Grundlage des Datensatzes von dem Ultraschallsensor empfangen und mit einem Sollergebnis vergleichen sowie die Authentizität des Ultraschallsensors abhängig von dem Vergleich feststellen.

Die Erfindung betrifft außerdem einen Ultraschallsensor für ein Kraftfahrzeug, welcher eine elektronische Recheneinheit umfasst, die zur Kommunikation mit einer Steuereinheit des Kraftfahrzeugs ausgebildet ist, wobei in der Recheneinheit ein Berechnungsalgorithmus zur Authentifizierung des Ultraschallsensors abgelegt ist und außerdem die Recheneinheit dazu ausgelegt ist, einen Datensatz von der Steuereinheit zu empfangen, den Berechnungsalgorithmus unter Verwendung des empfangenen Datensatzes durchzuführen bzw. auf den empfangenen Datensatz anzuwenden und ein Ergebnis des Berechnungsalgorithmus an die Steuereinheit zu übermitteln.

Eine erfindungsgemäße Ultraschallsensorvorrichtung für ein Kraftfahrzeug umfasst eine erfindungsgemäße Steuereinheit sowie einen erfindungsgemäßen Ultraschallsensor.

Ein erfindungsgemäßes Kraftfahrzeug, insbesondere ein Personenkraftwagen, umfasst eine erfindungsgemäße Ultraschallsensorvorrichtung.

Die mit Bezug auf das erfindungsgemäße Verfahren vorgestellten bevorzugten Ausführungsformen und deren Vorteile gelten entsprechend für die erfindungsgemäße Steuereinheit, für den erfindungsgemäßen Ultraschallsensor, für die erfindungsgemäße Ultraschallsensorvorrichtung sowie für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:

Fig. 1   in schematischer Darstellung ein Kraftfahrzeug mit einer Ultraschallsensorvorrichtung gemäß einer Ausführungsform der Erfindung;

Fig. 2   ein Flussdiagramm eines Verfahrens gemäß einer Ausführungsform der Erfindung; und

Fig. 3   ein Flussdiagramm eines Verfahrens gemäß einer weiteren Ausführungsform.

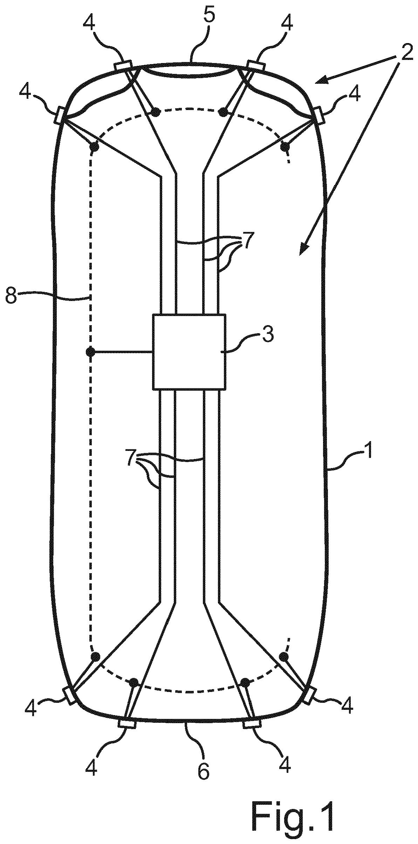

Ein in Fig. 1 dargestelltes Kraftfahrzeug 1 ist beispielsweise ein Personenkraftwagen. Das Kraftfahrzeug 1 umfasst eine Ultraschallsensorvorrichtung 2, welche eine elektronische Steuereinheit 3 (Steuergerät) sowie eine Vielzahl von Ultraschallsensoren 4 aufweist, welche an dem Kraftfahrzeug 1 verteilt angeordnet sind. Es können beispielsweise eine Vielzahl von Ultraschallsensoren 4 am vorderen Stoßfänger 5 sowie eine Vielzahl von Ultraschallsensoren 4 am hinteren Stoßfänger 6 angeordnet sein. Die Anzahl sowie die Anordnung der Ultraschallsensoren 4 sind in Fig. 1 lediglich beispielhaft dargestellt. Sowohl die Anzahl als auch die Anordnung der Ultraschallsensoren 4 kann je nach Ausführungsbeispiel unterschiedlich sein.

Die Steuereinheit 3 kommuniziert mit den Ultraschallsensoren 4. Zu diesem Zwecke bzw. zum Zwecke der Ansteuerung der Ultraschallsensoren 4 sind zwei alternative Ausführungsformen vorgesehen: Zum einen kann die Steuereinheit 3 jeweils über eine separate Datenleitung 7 mit dem jeweiligen Ultraschallsensor 4 gekoppelt sein. Alternativ können die Ultraschallsensoren 4 und die Steuereinheit 3 an einen gemeinsamen Kommunikationsbus 8 angebunden sein, wie dies in Fig. 1 mit der gestrichelten Linie angedeutet ist. Der Kommunikationsbus 8 kann z.B. der LIN-Bus sein.

Die Steuereinheit 3 kann alle Ultraschallsensoren 4 einzeln authentifizieren und somit zu jedem Ultraschallsensor 4 separat feststellen, ob dieser Ultraschallsensor 4 ein authentischer Sensor ist oder nicht, also beispielsweise ein Sensor desselben Herstellers wie die Steuereinheit 3. Dazu ist in der Steuereinheit 3 - nämlich in einem nichtflüchtigen Speicher - für jeden Ultraschallsensor 4 ein Datensatz abgespeichert. Dieser Datensatz wird von der Steuereinheit 3 an den jeweiligen Ultraschallsensor 4 bei jeder Inbetriebnahme des Kraftfahrzeugs 1 (beim Signal "Zündung an") übermittelt und in einem flüchtigen Speicher oder einem Register des Ultraschallsensors 4 abgelegt und beim Abstellen des Kraftfahrzeugs 1 ("Zündung aus") wieder gelöscht. Der Datensatz kann für alle Ultraschallsensoren 4 oder aber für mehrere Gruppen von Ultraschallsensoren 4 unterschiedliche Datenwerte beinhalten.

Der genannte Datensatz beinhaltet bevorzugt Schwellwerte, mit denen die Höhe eines elektrischen Empfangssignals des jeweiligen Ultraschallsensors 4 verglichen wird. Diese Schwellwerte bilden insgesamt eine Schwellwertfunktion, welche von der Laufzeit der Ultraschallwellen und somit von der gemessenen Entfernung abhängig ist. Eine solche Schwellwertfunktion dient dabei der Ausblendung von Bodenreflektionen, d.h. derjenigen Zielechos, die von dem Boden selbst und nicht von echten Zielobjekten stammen. Abhängig von dem Einbauort des jeweiligen Ultraschallsensors 4 werden dabei unterschiedliche Schwellwerte und somit unterschiedliche Schwellwertfunktionen verwendet.

Jeder Ultraschallsensor 4 umfasst eine interne Recheneinheit, in welcher ein vorgegebener Authentifizierungsberechnungsalgorithmus abgelegt ist. Jeder Ultraschallsensor 4 wendet diesen Berechnungsalgorithmus auf den empfangenen Datensatz an und bestimmt somit ein Ergebnis dieser Berechnung. Zusätzlich zu dem empfangenen Datensatz wird bei dem Berechnungsalgorithmus auch ein sensorindividueller Sensorparameter verwendet, wie insbesondere die Ausschwingzeit der jeweiligen Membran. Das Ergebnis des Berechnungsalgorithmus wird dann als sensorspezifische Signierung an die Steuereinheit 3 übermittelt, welche dieses empfangene Ergebnis mit einem Sollergebnis vergleicht. Stimmen die beiden Ergebnisse überein, wird der Ultraschallsensor 4 als "korrekt" klassifiziert. Wird eine Abweichung festgestellt, kann eine Fehlermeldung ausgegeben werden, und die Ultraschallsensorvorrichtung 2 kann abgeschaltet werden.

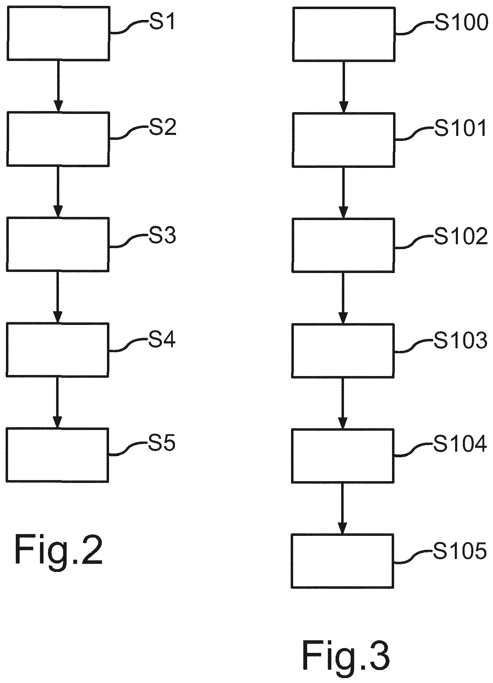

Ein Flussdiagramm eines Verfahrens gemäß einer Ausführungsform der Erfindung ist in Fig. 2 dargestellt. Das Verfahren startet in einem ersten Schritt S1, in welchem das Kraftfahrzeug 1 in Betrieb genommen wird und somit die Zündung eingeschaltet wird. In einem zweiten Schritt S2 sendet die Steuereinheit 3 an die Ultraschallsensoren 4 den jeweils zugeordneten Datensatz mit den Schwellwerten und optional weitere Konfigurationsparameter. Diese Datensätze sind zunächst ausschließlich in der Steuereinheit 3 dauerhaft abgelegt und spezifisch für das Kraftfahrzeug 1 festgelegt. Die Datensätze werden nun in den jeweiligen flüchtigen Speichern der Ultraschallsensoren 4 abgelegt, nämlich temporär. In einem weiteren Schritt S3 sendet die Steuereinheit 3 ein Steuersignal an jeden Ultraschallsensor 4 (vorzugsweise zeitversetzt einen nach dem anderen), wobei aufgrund dieses Steuersignals die jeweilige Membran des Ultraschallsensors 4 zur mechanischen Schwingung angeregt wird und eine Ausschwingzeit dieser Membran als Sensorparameter gemessen wird. Abhängig von dieser Ausschwingzeit und andererseits auch abhängig von dem empfangenen Datensatz führt der jeweilige Ultraschallsensor 4 den abgelegten Berechnungsalgorithmus aus und speichert das Ergebnis dieser Berechnung. In einem weiteren Schritt S4 steuert die Steuereinheit 3 die Ultraschallsensoren 4 (insbesondere einen nach dem anderen) dazu an, die jeweils gemessene Ausschwingzeit der Membran sowie das jeweilige Ergebnis der Berechnung an die Steuereinheit 3 zu übermitteln. Die Steuereinheit 3 empfängt nun alle Berechnungsergebnisse und alle Ausschwingzeiten und bestimmt nun anhand dieser Ausschwingzeiten sowie der abgelegten Datensätze die Sollergebnisse. Die empfangenen Ergebnisse werden nun in einem Schritt S5 mit den Sollergebnissen verglichen, und es wird festgestellt, ob die Ultraschallsensoren 4 authentisch sind oder nicht.

Die an einen einzelnen Ultraschallsensor 4 übermittelten Schwellwerte können insgesamt z.B. 12 Werte mit je 5 Bit (Wertebereich zwischen 0 und 31) beinhalten. Die jeweilige Ausschwingzeit der Membran kann beispielsweise ein Wert von 11 Bit sein. Der vorbestimmte Berechnungsalgorithmus kann beispielsweise so aussehen, dass alle Schwellwerte und zusätzlich auch die jeweilige Ausschwingzeit aufsummiert werden, so dass das Ergebnis der Berechnung die Summe aller Schwellwerte und der Ausschwingzeit darstellt.

Gemäß einem anderen Beispiel kann im Rahmen des Berechnungsalgorithmus beispielsweise folgende Berechnung durchgeführt werden:

$$\text{Schwellwert\_1} - \text{Schwellwert\_2} + \text{Schwellwert\_3} - \text{Schwellwert\_4} + \text{Schwellwert\_5}....$$

Hier erfolgt also abwechselnd ein Addieren und dann ein Subtrahieren der Schwellwerte in der vorgegebenen Reihenfolge. Alternativ können beispielsweise auch immer zwei Schwellwerte addiert und der darauffolgende Schwellwert subtrahiert werden.

Das Ergebnis des Berechnungsalgorithmus benötigt dabei maximal 12 Bit und kann somit innerhalb einer bereits bestehenden Botschaft bei jeder Inbetriebnahme des Kraftfahrzeugs 1 durch die Steuereinheit 3 ausgelesen werden.

Ein weiteres Flussdiagramm eines Verfahrens ist in Fig. 3 dargestellt. Analog zum Verfahren gemäß Fig. 2 beginnt das Verfahren im Schritt S100 mit dem Einschalten der Zündung und somit mit der Inbetriebnahme des Kraftfahrzeugs 1. Im Unterschied zum Verfahren gemäß Fig. 2 erfolgt dann in Schritt S101 ein Auslesen der aktuellen Ausschwingzeit des jeweiligen Ultraschallsensors 4 und des jeweiligen Ergebnisses des Berechnungsalgorithmus. In diesem Schritt S101 werden die Berechnungsalgorithmen in den Ultraschallsensoren 4 anhand von Standardschwellwerten ausgeführt, welche in den Ultraschallsensoren 4 dauerhaft hinterlegt sind. Diese Standardwerte können sogar bei allen Ultraschallsensoren 4 gleich sein. Die Steuereinheit 3 kann nun eine erste Überprüfung der Ultraschallsensoren 4 vornehmen, indem die übermittelten Ergebnisse mit Sollergebnissen verglichen werden. In einem weiteren Schritt S102 übermittelt die Steuereinheit 3 an die Ultraschallsensoren 4 den jeweils zugeordneten Datensatz mit den Schwellwerten. In einem weiteren Schritt S103 wird dann ein Steuersignal an die Ultraschallsensoren 4 abgegeben, aufgrund dessen die Ultraschallsensoren 4 bzw. die jeweiligen Membrane angeregt werden und somit die jeweilige Ausschwingzeit gemessen wird. In einem weiteren Schritt S104 werden diese Ausschwingzeiten sowie die neuen Ergebnisse des Berechnungsalgorithmus durch die Steuereinheit 3 ausgelesen. In einem letzten Schritt S105 vergleicht die Steuereinheit 3 zum zweiten Mal die empfangenen Ergebnisse mit Sollergebnissen, die nun abhängig von den empfangenen Ausschwingzeiten ermittelt werden. Beim Verfahren gemäß Fig. 3 erfolgt somit eine redundante zweifache Überprüfung der Ultraschallsensoren 4 auf ihre Authentizität hin, und zwar einerseits abhängig von den abgelegten Standardwerten und andererseits abhängig von den übermittelten Datensätzen.

**Patentansprüche**

1. Verfahren zum Feststellen der Authentizität eines Ultraschallsensors (4) eines Kraftfahrzeugs (1), der mittels einer Steuereinheit (3) des Kraftfahrzeugs (1) angesteuert wird, **gekennzeichnet durch** folgende Schritte:

   - Übermitteln eines Datensatzes von der Steuereinheit (3) an den Ultraschallsensor (4),
   - Durchführen einer vorbestimmten Berechnung unter Verwendung des Datensatzes durch den Ultraschallsensor (4) und Übermitteln eines Ergebnisses der Berechnung an die Steuereinheit (3) und
   - Vergleichen des empfangenen Ergebnisses mit einem Sollergebnis und Feststellen der Authentizität des Ultraschallsensors (4) durch die Steuereinheit (3) abhängig von dem Vergleich,
   - wobei der Datensatz Datenwerte umfasst, die im Betrieb des Ultraschallsensors (4) zum Durchführen einer Abstandsmessung durch den Ultraschallsensor (4) verwendet werden,

   und wobei mittels des Ultraschallsensors (4) die vorbestimmte Berechnung zusätzlich in Abhängigkeit von einem sensorspezifischen Sensorparameter des Ultraschallsensors (4) durchgeführt wird.

2. Verfahren nach Anspruch 1,
   **dadurch gekennzeichnet, dass**

von der Steuereinheit (3) an den Ultraschallsensor (4) ein Datensatz übermittelt wird, der ausschließlich in der Steuereinheit (3) dauerhaft abgelegt wird und nach dem Übermitteln an den Ultraschallsensor (4) in diesem lediglich temporär abgespeichert wird.

3. Verfahren nach einem der vorhergehenden Ansprüche,
**dadurch gekennzeichnet, dass**
der Ultraschallsensor (4) ein auf den Ultraschallsensor (4) einfallendes Ultraschallsignal empfängt und abhängig von dem Ultraschallsignal ein elektrisches Empfangssignal bereitstellt, wobei der Datensatz Schwellwerte umfasst, mit denen die Höhe des elektrischen Empfangssignals im Betrieb des Ultraschallsensors (4) verglichen wird.

4. Verfahren nach einem der vorhergehenden Ansprüche,
**dadurch gekennzeichnet, dass**
als der Sensorparameter eine Messgröße verwendet wird, die mittels des Ultraschallsensors (4) gemessen wird.

5. Verfahren nach einem der vorhergehenden Ansprüche,
**dadurch gekennzeichnet, dass**
die vorbestimmte Berechnung in Abhängigkeit von einer Ausschwingzeit einer Membran des Ultraschallsensors (4) als Sensorparameter durchgeführt wird.

6. Ultraschallsensor (4) für ein Kraftfahrzeug (1), umfassend eine elektronische Recheneinheit, welche zur Kommunikation mit einer sensorexternen Steuereinheit (3) des Kraftfahrzeugs (1) ausgebildet ist,
**dadurch gekennzeichnet, dass**
in der Recheneinheit ein Berechnungsalgorithmus zur Authentifizierung des Ultraschallsensors (4) abgelegt ist und die Recheneinheit dazu ausgelegt ist, einen Datensatz von der Steuereinheit (3) zu empfangen, den Berechnungsalgorithmus unter Verwendung des Datensatzes durchzuführen und ein Ergebnis des Berechnungsalgorithmus an die Steuereinheit (3) zu übermitteln, wobei der Datensatz Datenwerte umfasst, die im Betrieb des Ultraschallsensors (4) zum Durchführen einer Abstandsmessung durch den Ultraschallsensor (4) verwendet werden, und wobei mittels des Ultraschallsensors (4) die vorbestimmte Berechnung zusätzlich in Abhängigkeit von einem sensorspezifischen Sensorparameter des Ultraschallsensors (4) durchgeführt wird.

**Claims**

1. Method for determining the authenticity of an ultrasonic sensor (4) of a motor vehicle (1), which is activated by means of a control unit (3) of the motor vehicle (1), **characterized by** the following steps:

   - transmission of a data set from the control unit (3) to the ultrasonic sensor (4),
   - carrying out a predetermined calculation using the data set by the ultrasonic sensor (4) and transmission of a result of the calculation to the control unit (3) and
   - comparison of the received result with a target result and determining the authenticity of the ultrasonic sensor (4) by the control unit (3) depending on the comparison,
   - wherein the data set comprises data values that are used by the ultrasonic sensor (4) for carrying out a distance measurement during the operation of the ultrasonic sensor (4),

   and wherein the predetermined calculation is additionally carried out by means of the ultrasonic sensor (4) depending on a sensor-specific sensor parameter of the ultrasonic sensor (4).

2. Method according to Claim 1,
**characterized in that**
a data set is transmitted from the control unit (3) to the ultrasonic sensor (4), which is permanently stored only in the control unit (3) and following transmission to the ultrasonic sensor (4) is only temporarily stored in the same.

3. Method according to either one of the preceding claims,
**characterized in that**
the ultrasonic sensor (4) receives an ultrasonic signal that is incident on the ultrasonic sensor (4) and provides an electrical reception signal depending on the ultrasonic signal, wherein the data set comprises threshold values with which the magnitude of the electrical reception signal is compared during the operation of the ultrasonic sensor (4).

**4.** Method according to any one of the preceding claims,
**characterized in that**
a measurement variable that is measured by means of the ultrasonic sensor (4) is used as the sensor parameter.

**5.** Method according to any one of the preceding claims,
**characterized in that**
the predetermined calculation is carried out depending on a settling time of a membrane of the ultrasonic sensor (4) as the sensor parameter.

**6.** Ultrasonic sensor (4) for a motor vehicle (1), comprising an electronic arithmetic unit, which is designed for communications with a control unit (3) of the motor vehicle (1) that is external to the sensor,
**characterized in that**
a calculation algorithm for authentication of the ultrasonic sensor (4) is stored in the arithmetic unit and the arithmetic unit is configured to receive a data set from the control unit (3), to carry out the calculation algorithm using the data set and to transmit a result of the calculation algorithm to the control unit (3), wherein the data set comprises data values that are used by the ultrasonic sensor (4) for carrying out a distance measurement during operation of the ultrasonic sensor (4), and wherein the predetermined calculation is additionally carried out by means of the ultrasonic sensor (4) depending on a sensor-specific sensor parameter of the ultrasonic sensor (4).

**Revendications**

**1.** Procédé pour constater l'authenticité d'un capteur à ultrasons (4) d'un véhicule automobile (1), lequel est excité au moyen d'une unité de commande (3) du véhicule automobile (1), **caractérisé par** les étapes suivantes :

- communication d'un jeu de données de l'unité de commande (3) au capteur à ultrasons (4),
- réalisation d'un calcul prédéterminé en utilisant le jeu de données par le capteur à ultrasons (4) et communication d'un résultat du calcul à l'unité de commande (3) et
- comparaison du résultat reçu avec un résultat voulu et constatation de l'authenticité du capteur à ultrasons (4) par l'unité de commande (3) en fonction de la comparaison,
- le jeu de données comprenant des valeurs de données qui, lors du fonctionnement du capteur à ultrasons (4), sont utilisées pour effectuer une mesure de distance par le capteur à ultrasons (4),

et le calcul prédéterminé est effectué au moyen du capteur à ultrasons (4) en plus en fonction d'un paramètre de capteur spécifique au capteur du capteur à ultrasons (4).

**2.** Procédé selon la revendication 1, **caractérisé en ce qu'**un jeu de données de l'unité de commande (3) au capteur à ultrasons (4), lequel est stocké en permanence uniquement dans l'unité de commande (3) et, après la communication au capteur à ultrasons (4), est uniquement enregistré temporairement dans celui-ci.

**3.** Procédé selon l'une des revendications précédentes, **caractérisé en ce que** le capteur à ultrasons (4) reçoit un signal ultrasonore incident sur le capteur à ultrasons (4) et fournit un signal de réception électrique en fonction du signal ultrasonore, le jeu de données comprenant des valeurs de seuil avec lesquelles est comparée l'amplitude du signal de réception électrique lors du fonctionnement du capteur à ultrasons (4).

**4.** Procédé selon l'une des revendications précédentes, **caractérisé en ce que** le paramètre de capteur utilisé est une grandeur mesurée qui est mesurée au moyen du capteur à ultrasons (4).

**5.** Procédé selon l'une des revendications précédentes, **caractérisé en ce que** le calcul prédéterminé est effectué en fonction d'un temps d'évanouissement des oscillations d'une membrane du capteur à ultrasons (4) en tant que paramètre de capteur.

**6.** Capteur à ultrasons (4) pour un véhicule automobile (1), comprenant une unité de calcul électronique qui est configurée pour la communication avec une unité de commande (3) externe du véhicule automobile (1),
**caractérisé en ce que**
un algorithme de calcul servant à l'authentification du capteur à ultrasons (4) est stocké dans l'unité de calcul et l'unité de calcul est conçue pour recevoir un jeu de données de la part de l'unité de commande (3), exécuter l'algorithme de calcul en utilisant le jeu de données et communiquer le résultat de l'algorithme de calcul à l'unité de commande (3), le jeu de données comprenant des valeurs de données qui, lors du fonctionnement du capteur à ultrasons (4), sont utilisées pour effectuer une mesure de distance par le capteur à ultrasons (4), et le calcul prédéterminé est effectué au moyen du capteur à ultrasons (4) en plus en fonction d'un paramètre de capteur spécifique au capteur du capteur à ultrasons (4).

Fig.1

Fig.2

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10352071 A1
- EP 2426869 A1
- DE 10236879 A1